# EUROPEAN PATENT SPECIFICATION

(11) **EP 0 831 441 B1**
(45) Date of publication and mention of the grant of the patent: **09.02.2005**
(21) Application number: 97116168.2
(22) Date of filing: 17.09.1997
(51) Int. Cl.: G08B 5/22

(54) **Radio selective calling receiver and method of judging received data**
Selektivfunkrufempfänger und Verfahren zur Beurteilung von Empfangsdaten
Récepteur radio d'appel sélectif et méthode pour juger les données reçues

(30) Priority: 19.09.1996 JP 24821496
(43) Date of publication of application: 25.03.1998
(73) Proprietor: NEC CORPORATION, Tokyo (JP)
(72) Inventor: Narusawa, Hideki, Kakegawa-shi, Shizuoka (JP)
(74) Representative: VOSSIUS & PARTNER

(56) References cited:
- GB-A- 2 253 503
- US-A- 5 159 331
- US-A- 5 185 604
- PATENT ABSTRACTS OF JAPAN vol. 016, no. 564 (E-1295), 4 December 1992 & JP 04 216220 A (NEC COMMUN SYST LTD), 6 August 1992,

## Description

The present invention relates in general to a radio selective calling system for adding a transmission number to data to carry out the data transmission when the data is transmitted from a transmission system site to each of radio selective calling receivers, and more particularly, in this system, to a radio selective calling receiver which is provided with a facility for detecting retransmission data and an omission of the data on the basis of the transmission number contained in the received data.

In a radio selective calling system of this sort, when the data is transmitted from the transmission system site to each of the radio selective calling receiver, the assignment of the transmission number is carried out for every radio selective calling receiver, and the data is transmitted with the transmission number added to the associated data. In addition, there is the case where the data identical to the data which has already been transmitted is transmitted again from the transmission system. In such a case, however, the transmission number identical to the transmission number which was added to the data once is added to the data, and then the data is retransmission. Incidentally, as for the system for carrying out the control in such a way that such a transmission number is added to the associated data and the data having the transmission number added thereto is transmitted, there is, for example, well known the system which is designed in accordance with a FLEX as the world-widely general standaor an ERMES as European Standard.

On the other hand, in the radio selective calling receiver for use in the radio selective calling system of this sort, since the signal is received with the new data and the retransmission data mixed with each other as described above, the control for the reception based on the transmission number is carried out as follows:
(1) When the signal has been received, the transmission number is detected from the signal thus received.
(2) The received data which was received is stored in the order of the transmission numbers in the storage means.
(3) The transmission number which has been newly received and the data which has been received so as to follow the transmission number are compared with the newest M (M is an integral number) transmission numbers, which are stored in the above-mentioned storage means, and the newest M data received so as to follow the newest M transmission numbers, respectively. As a result, when the transmission number and the received data following the transmission number which are respectively identical in contents to those which have been received this time are present in the newest M transmission numbers and the newest M received data, respectively, the data which has been received this time is regarded as the retransmission data, and hence the warning for the data reception is not carried out.
(4) When the difference between the transmission number which has been newly received and the newest transmission number stored in the above-mentioned storage means is detected and it is equal to or larger than two, the warning that the data is failed to be received through the transmission data is present (hereinafter, referred to as "a data omission" for short, when applicable) is outputted. That is, when any transmission number is skipped, it is judged that there is the data omission, and then the user is informed of this fact.

An example of above-mentioned invention, JP-A-267825/1991 disclosed a radio selective calling receiver.

Now, in the above-mentioned conventional radio selective calling receiver, there arises the problem that when the retransmission data is received which has the transmission number older than any one of the newest M transmission numbers stored in the storage means, each of the above-mentioned warnings is not properly issued. This problem will hereinbelow be described by taking a concrete example.

For example, it is assumed that the newest M (M = 4 in this example) transmission numbers out of the transmission numbers which have been received till now and are stored in the storage means are as follows.
153, 152, 151, 150

Then, it is assumed that under this condition, the retransmission data having the transmission number "148" is received. In this case, since the transmission number "148" is absent in the newest M transmission numbers, the data thus received is treated as the wholly new received data though it is the retransmission data, and hence the warning that the transmission data has been newly received is issued.

In addition, as a result of writing the transmission number "148" of the received data to the storage means since the received data is judged to be the wholly new received data, the newest M transmission numbers stored in the storage means are as follows.
148, 153, 152, 151

Then, it is assumed that thereafter, the data having the transmission number "154" is received. In this case, since the transmission number of the newest received data is "148", in the conventional radio selective calling receiver, it is judged that the data omission occurs in the reception of the data of the transmission numbers ranging from "147" to "154".

Thus, in the conventional radio selective calling receiver, when the retransmission data having the transmission number which does not match any one of the newest M transmission numbers stored in the storage means, it is not detected that the data of interest is the retransmission data, and also the retransmission data is treated as the new transmission data. As a result, when the new transmission data is then received, the mistaken warning for the data omission in reception is issued.

The present invention was made in the light of the foregoing problems associated with the prior art, and it is therefore an object of the present invention to provide a radio selective calling receiver which is capable of detecting properly the retransmission data and detecting properly the omission of the transmission data in reception even under the situation in which the data having the transmission data which is older than any one of a predetermined number of newest transmission numbers stored in the storage means is received.

The objective of the present invention is achieved by a radio selective calling receiver for use in a radio selective calling system for adding a transmission number to transmission data every radio selective calling receiver for transmitting said transmission data and adding the same transmission number to transmission data for retransmitting said transmission data, said radio selective calling receiver comprising:
detection means for detecting both transmission data and its transmission number from a received signal;
storage means for successively storing therein said detected data and their transmission numbers;
retransmission data judging means for judging, when a newly received transmission number is older than a newest transmission number stored in said storage means and also a difference between said newly received transmission number and said newest transmission number is equal to or smaller than X (X is an arbitrary setting value), that said newly received data is retransmission data;
data omission judging means for judging, when a newly received transmission number is older than the newest transmission number stored in the storage means and also the difference between said newly received transmission number and said newest transmission number is larger than said X, that a data omission is present in said data in reception;
   and
control means for writing, when judgment that said newly received data is said retransmission data was not carried out by said retransmission data judging means, both said newly received data and its transmission number to said storage means and also carrying out warning for said data reception, and warning for said data omission, when judgment that there was a data omission was carried out by said data omission judgment means.

According to the radio selective calling receiver of the present invention, even when the data having the transmission number which is older than any one of the newest M transmission numbers stored in the data storage section is received, since when the data of interest is the retransmission data, this fact can be detected, the retransmission data can be properly detected and also the omission of the transmission data can be properly detected.

### BRIEF DESCRIPTION OF THE DRAWINGS

This and other objects, features and advantages of the present invention will become more apparent upon a reading of the following detailed description and drawings, in which:
Fig. 1 is a block diagram showing a configuration of a radio selective calling receiver according to one embodiment of the present invention; and
Fig. 2 is a flow chart showing the operation of the embodiment shown in Fig. 1.

### DESCRIPTION OF THE EMBODIMENTS

Next, the present invention will be described with reference to the accompanying drawings.

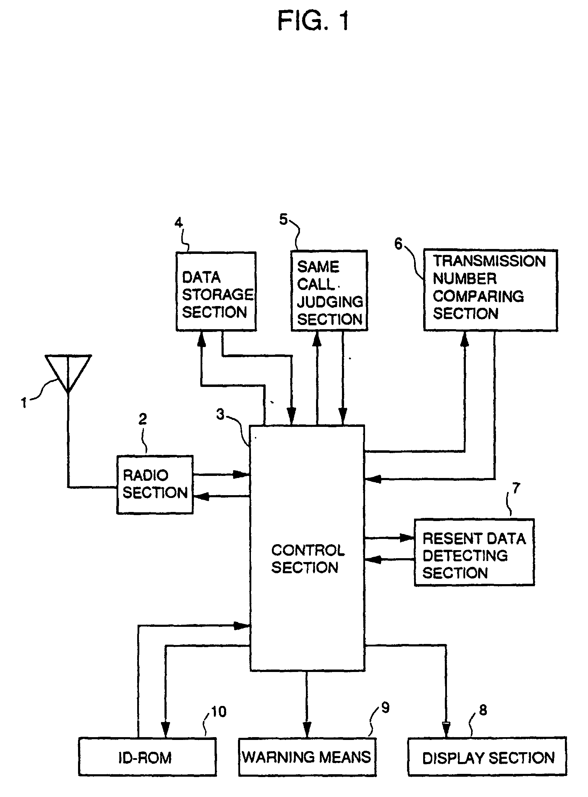

Fig. 1 is a block diagram showing a configuration of a radio selective calling receiver according to an embodiment of the present invention. As shown in Fig. 1, this radio selective calling receiver includes: a radio section 2 for demodulating a radio signal which is received through an antenna 1; a data storage section 4 for managing and storing therein, every transmission number, data (including its transmission number) which is received by the radio section 2; a same call judging section 5 for judging whether or not the data (including its transmission number) which is newly received by the radio section 2 is the same as the data which was received in the past; a transmission number comparing section 6 for judging whether or not an omission is present in the received transmission numbers; a retransmission data detecting section 7 for detecting whether or not the data which is newly received is the retransmission data; a display section 8 for displaying thereon the data, the transmission numbers and the like; warning means 9 for carrying out the warning using a vibrator, a speaker, an LED or the like; an ID-ROM 10 for storing therein a self-selective call number, and arbitrary setting values M and X; and a control section 3 for controlling these sections described above.

Now, the same call judging section 5 compares the data which has been newly received by the radio section 2 and its transmission number with the newest M data and the newest M transmission numbers which are stored in the data storage section 4, and judges that the newly received data is the retransmission data when the data which has been newly received by the radio section 2 and its transmission number match one of the newest M data and one of the newest M transmission numbers, respectively, and informs the control section 3 of this fact. When the control section 3 is informed of that the newly received data is the retransmission data, the warning for reporting the data reception is not carried out by the warning means 9. Incidentally, the setting value M which is stored in the above-mentioned ID-ROM 10 is set in the data storage section 4 by the control section 3.

The transmission number comparing section 6 detects whether or not the omission is present in the transmission numbers by comparing the newly received transmission number with the newest transmission number stored in the data storage section 4. The control section 3 carries out the processing corresponding to that detection result. The processing will be concretely described as follows.
a) When the newly received transmission number is large (i.e., newer) than the newest transmission number stored in the data storage section 4, and also the continuity is obtained between both the transmission numbers, the control section 3 is informed of that no omission is present in the transmission numbers. In this case, on the basis of the control by the control section 3, both the data which has been newly received and its transmission number are stored in the data storage section 4, the warning for reporting the data reception is carried out by the warning means 9, and at the same time, both that data and its transmission number are displayed on the display section 8.
b) When the newly received transmission number is larger than the newest transmission number stored in the data storage section 4 and also the continuity is not obtained between both the transmission numbers, the control section 3 is informed of that the omission is present in the transmission numbers. In this case, on the basis of the control by the control section 3, both the data which has been newly received and its transmission number are stored in the data storage section 4, the warning for reporting the data reception is carried out by the warning means 9, and at the same time, both that data and its transmission number are displayed on the display section 8. Thereafter, on the basis of the control by the control section 3, the warning for reporting the data omission is carried out by the warning means 9, and at the same time, the omitted transmission number is displayed on the display section 8.
c) When the newly received transmission number is smaller (i.e., older) than the newest transmission number stored in the data storage section 4, the judgment of existence and non-existence of the data omission based on the transmission numbers is not carried out. In this case, whether or not the data omission is present is entrusted to the processing in the retransmission data detecting section 7.

The retransmission data detecting section 7 detects whether the newly received data is the data which has been transmitted for the first time this time or the retransmission data depending on whether or not the value which is obtained by subtracting the transmission number received by the radio section 2 from the newest transmission number stored in the data storage section 4 is larger than the arbitrary setting value X. Incidentally, the arbitrary setting value X which is stored in the above-mentioned ID-ROM 10 is set in the data storage section 4 through the control by the control section 3.

The processing of judging the retransmission data which is executed by the retransmission data detecting section 7 will be more concretely described as follows.
a) When the value which is obtained by subtracting the transmission number received by the radio section 2 from the newest transmission number stored in the data storage section 4 is larger than the setting value X, it is judged that the data omission occurs, and the control section 3 is informed of the omitted transmission number. In this case, on the basis of the control by the control section 3, both the newly received data and its transmission number are stored in the data storage section 4, the warning for reporting the data reception is carried out by the warning means 9, and at the same time, both that data and its transmission number are displayed on the display section 8. Thereafter, on the basis of the control by the control section 3, the warning for reporting the data omission is carried out by the warning means 9, and at the same time, the omitted transmission number is displayed on the display section 8.
b) When the value which is obtained by subtracting the transmission number received by the radio section 2 from the newest transmission number stored in the data storage section 4 is smaller than the setting value X, it is judged that the newly received data is the retransmission data, and the control section 3 is informed of this fact.

In this case, the control section 3 compares the newly received data and its transmission number with all the data and their transmission numbers which are stored in the data storage section 4 in order to judge whether or not the newly received data and its transmission number match one of the data and its transmission number which are stored in the data storage section 4.

Then, if so, since it becomes clear that the newly received data is the retransmission data, the warning for the data reception by the warning means 9 is not carried out.

On the other hand, if not, it is judged that the newly received data is the retransmission data, but is the data which could not be received when carrying out the first calling. Then, on the basis of the control by the control section 3, both the newly received data and its transmission number are stored in the data storage section 4, the warning for reporting the data reception is carried out by the warning means 9, and at the same time, both that data and its transmission number are displayed on the display section 8. But, in this case, the processing is executed by the control section 3 in such a way that the newly received transmission number is not treated as the newest transmission number during the reception of the subsequent new transmission number.

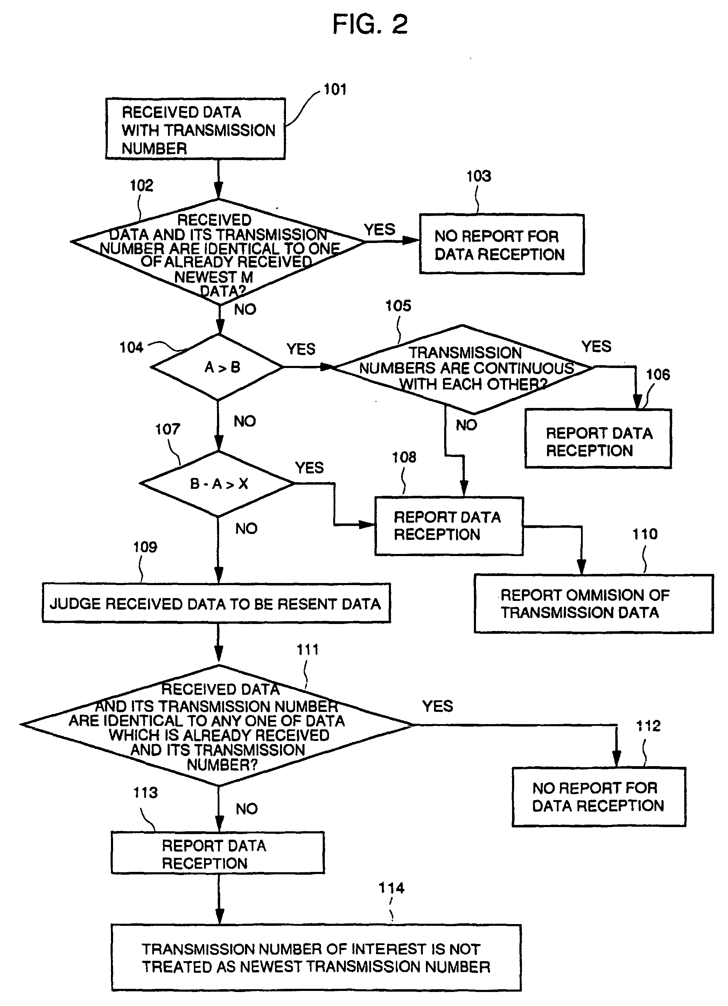

Fig. 2 is a flow chart showing the operation of the judgment for the retransmission data in the present embodiment. The operation of the present embodiment will hereinafter be described with reference to the flow chart.

When the radio selective calling receiver has received the data with the transmission number (Step 101), it is judged whether or not the data thus received and its transmission number are identical to one of the newest M data and its transmission number which are already received (Step 102). If so, then it is judged that the newly received data is the retransmission data, and the warning for the data reception is not carried out (Step 103). The reason that the judgment for the retransmission data based on the comparison of the newly received data and its transmission number with the newest M data and their transmission numbers is firstly carried out in such a way that by processing firstly the matters which can be speedily judged, it is aimed that the total processing speed is increased.

On the other hand, if not, then it is judged whether or not the transmission number A of the newly received data is larger than the newest transmission number B which is already received (Step 104).

Then, when the transmission number A is larger than the transmission number B, it is judged whether or not the continuity is obtained between both the transmission numbers A and B (Step 105). If so, since the newly received data is the data next to the newest data of the newest transmission number B, the warning for the data reception is carried out (Step 106). On the other hand, if not, then it is judged that the data which could not be received is present between the data of the transmission number B and the data of the transmission number A. Then, firstly, the warning for the data reception is carried out (Step 108), and next, the warning for the data omission is carried out (Step 110).

On the other hand, when the transmission number A is smaller than the transmission number B, it is judged whether or not the value which is obtained by subtracting the transmission number A from the transmission number B is larger than the setting value X (Step 107). Then, when the value of (B - A) is larger than the setting value X, it is judged that the data which could not be received is present between the data of the transmission number B and the data of the transmission number A. Next, the warning for the data omission is carried out (Step 110).

On the other hand, when the value of (B - A) is smaller than the setting value X, it is judged that the newly received data is the retransmission data (Step 109). Then, it is judged whether or not the data which is identical to the data of interest and its transmission number are present in the data which is already received and their transmission numbers, respectively (Step 111). Then, if so, since it can be come to a conclusion that the data of interest is surely the retransmission data, the warning for the data reception is not carried out (Step 112).

On the other hand, if not, then it is judged that the first data of the newly received data could not be received, and the warning for the data reception is carried out (Step 113). But, the transmission number of the newly received data is not treated as the newest transmission number (Step 111).

## Claims

1. A radio selective calling receiver for use in a radio selective calling system for adding a transmission number to transmission data every radio selective calling receiver for transmitting said transmission data and adding the same transmission number to transmission data for retransmitting said transmission data, said radio selective calling receiver comprising:
detection means for detecting both transmission data and its transmission number from a received signal;
storage means for successively storing therein said detected data and their transmission numbers;
retransmission data judging means for judging, when a newly received transmission number is older than a newest transmission number stored in said storage means and also a difference between said newly received transmission number and said newest transmission number is equal to or smaller than X (X is an arbitrary setting value), that said newly received data is retransmission data;
data omission judging means for judging, when a newly received transmission number is older than the newest transmission number stored in the storage means and also the difference between said newly received transmission number and said newest transmission number is larger than said X, that a data omission is present in said data in reception; and
control means for writing, when judgment that said newly received data is said retransmission data was not carried out by said retransmission data judging means, both said newly received data and its transmission number to said storage means and also carrying out warning for said data reception, and warning for said data omission, when judgment that there was a data omission was carried out by said data omission judgment means.

2. The radio selective calling receiver according to claim 1, wherein said retransmission data judging means further comprises means for judging, when said newly received data is identical to one of the newest M (M is an arbitrary setting value) data stored in said storage means, and its transmission number is identical to one of said newest M transmission numbers stored therein, that said newly received data is said retransmission data.

3. The radio selective calling receiver according to claim 1, wherein said data ommision judging means further comprises means for judging, when said newly received transmission number is a transmission number which is newer than the newest transmission number stored in said storage means by equal to or larger than two, that a data ommision is present in said data in reception.

4. The radio selective calling receiver according to claim 2, wherein only when whether or not the newly received data is identical to one of the newest M (M is an arbitrary setting value) data stored in said storage means and whether or not its transmission number is identical to one of the newest M transmission numbers stored therein are firstly judged by said retransmission data judging means, and based on said that judgment, said judgment with respect to said received transmission number is carried out by said retransmission data judgment means or said data omission judging means.

5. The radio selective calling receiver according to claim 4, wherein said retransmission data judging means comprises for judging whether or not the transmission number identical to said transmission number of interest is stored in said storage means when said newly received transmission number is older than said newest transmission number stored in said storage means and also a difference therebetween is equal to or smaller than X, and judging that said newly received data is firstly transmitted and also it is said retransmission data which has been failed to be received when said transmission number identical thereto is not stored in said storage means,
and in such a case, said control means comprises means for controlling in such a way that both said data of interest and its transmission number are written to said storage means, and warning for said data reception, and said transmission number of interest is not treated as said newest transmission number.

6. A radio selective calling receiver for use in a radio selective calling system for adding a transmission number to data every radio selective calling receiver for transmitting said transmission data and adding the same transmission number to transmission data for retransmitting said transmission data, said radio selective calling receiver comprising:
detection means for detecting both said data and its transmission number based on said received signal;
storage means for successively storing therein said received data and their transmission numbers;
retransmission data judging means for judging, when said newly received data is identical to one of the newest M (M is an arbitrary setting value) data stored in said storage means and also its transmission number is identical to one of said newest M transmission numbers stored therein, or when said newly received transmission number is older than said newest transmission number stored in said storage means and also a difference between said newly received transmission number and said newest transmission number is equal to or smaller than X (X is an arbitrary setting value), that said newly received data is said retransmission data;
data omission judging means for judging, when said newly received transmission number is newer than said newest transmission number stored in said storage means by two or more, or when said newly received transmission number is older than said newest transmission number stored in the storage means and also a difference between said newly received transmission number and said newest transmission number is larger than said X, that a data omission is present in said data in reception; and
control means for writing, when judgment that said newly received data is said retransmission data was not carried out by said retransmission data judging means, both said data of interest and its transmission number to said storage means and also carrying out warning for said data reception, and warning for said data omission, when judgment that there was said data omission was carried out by said data omission judgment means.

7. The radio selective calling receiver according to claim 6, wherein only when whether or not said newly received data is identical to one of the newest M (M is an arbitrary setting value) data stored in said storage means and whether or not its transmission number is identical to one of said newest M transmission numbers stored therein are firstly judged by said retransmission data judging means, and also only when it is not judged based on that judgment that said data of interest is said retransmission data, judgment with respect to said newly received transmission number is carried out by said retransmission data judgment means or said data omission judging means.

8. The radio selective calling receiver according to claim 6, wherein said retransmission data judging means comprises for judging, when said newly received transmission number is older than said newest transmission number stored in said storage means and also a difference therebetween is equal to or smaller than X, whether or not said transmission number identical to said transmission number of interest is stored in said storage means, and judges, when said transmission number identical thereto is not stored in said storage means, that said newly received data is firstly transmitted and also it is said retransmission data which has been failed to be received, and in such a case, said control means comprises for controlling in such a way that both said data of interest and its transmission number are written to said storage means, and carries out warning for said data reception, and said transmission number of interest is not treated as said newest transmission number.

9. A radio selective calling receiver for use in a radio selective calling system for adding a transmission number to data every radio selective calling receiver for transmitting said transmission data and adding the same transmission number to transmission data for transmitting said transmission data, said radio selective calling receiver comprising:
an antenna for receiving a received signal;
detection means for demodulating said received signal and detecting both data and its transmission number from said received signal;
storage means for storing successively therein both said received data and their transmission numbers;
display means for displaying thereon both said received data and their transmission numbers;
warning means for warning;
first judgment means for comparing a newly received data and its transmission number with the newest M (M is an arbitrary setting value) data and their transmission numbers stored in said storage means, and outputting a first judgment signal when said newly received data is identical to any one of said newest M data and also its transmission number is identical to any one of said transmission numbers of said newest M data;
second judgment means for comparing, when said first judgment signal is not outputted from said first judgment means, said newly received transmission number with the newest transmission number, and outputting a second judgment signal when said newly received transmission number is larger than said newest transmission number stored in said storage means and also said newly received transmission number is continuous with said newest transmission number, and outputting a third judgment signal when said newly received transmission number is newer than said newest transmission number stored in said storage means by equal to or larger than two, and outputting a fourth judgment signal when said newly received transmission number is smaller than said newest transmission number stored in said storage means;
third judgment means for calculating, when receiving said fourth judgment signal, a difference between said newly received transmission number and said newest transmission number, and outputting a fifth judgment signal when said difference is equal to or larger than X (X is an arbitrary setting value), and outputting a sixth judgment signal when said difference is equal to or smaller than said X;
control means for controlling in such a way that when receiving said first judgment signal, said warning by said warning means is not carried out, and when receiving said second judgment signal, both said newly received data and its transmission number are stored in said storage means, said warning for reporting said data reception is carried out by said warning means, and also both said data and its transmission number are displayed on said display means, and when receiving said third judgment signal, both said newly received data and its transmission number are stored in said storage means, said warning for reporting said data reception is carried out by said warning means and also both said data and its transmission number are displayed on said display means, and thereafter, it is reported by said warning means that there was a data omission, and said omitted transmission number is displayed on said display means, and when receiving said fifth judgment signal, both said newly received data and its transmission number are stored in said storage means, said warning for reporting said data reception is carried out by said warning means, and both said data and its transmission number are displayed on said display means, and thereafter, it is reported by said warning means that there was a data omission, and said omitted transmission number is displayed on said display means, and when receiving said sixth judgment signal, said newly received data and its transmission number are compared with all said data and their transmission numbers stored in said storage means, respectively, and then when said newly received data is identical to any one of all said data and also its transmission number is identical to any one of their transmission numbers, said warning for reporting said data reception is not carried out, while when said newly received data is not identical to any one of all said data and also its transmission number is not identical to any one of their transmission numbers, both said newly received data and its transmission number are stored in said storage means, said warning for reporting said data reception is carried out by said warning means, both said data and its transmission number are displayed on said display means, and also said transmission number of said newly received data is not treated as the newest transmission number at all.

10. A method of controlling retransmission data for use in a radio selective calling system for adding a transmission number to transmission data every radio selective calling receiver for transmitting said transmission data and adding the same transmission number to retransmission data for retransmitting said retransmission data, said method comprising the steps of:
detecting both said data and its transmission number based on said received signal;
storing successively therein said received data and their transmission numbers;
judging, when said newly received data is identical to any one of the newest M (M is an arbitrary setting value) data which is previously stored and also its transmission number is identical to any one of said newest M transmission numbers thus stored, and when said newly received transmission number is older than said newest transmission number which is stored and also a difference between said newly received transmission number and said newest transmission number is equal to or smaller than X (X is an arbitrary setting value), that said newly received data is said retransmission data;
judging, when said newly received transmission number is newer than said newest transmission number which is previously stored by equal to or larger than two, and when said newly received transmission number is older than said newest transmission number thus stored and also a difference between said newly received transmission number and said newest transmission number is larger than said X, that a data omission is present in said data in reception; and
storing, when judgment that said newly received data is said retransmission data was carried out by said retransmission data judging means, both said newly received data and its transmission number and also carrying out warning for said data reception, and carrying out, when it is judged that there was said data omission, warning for said data omission.

11. The method according to claim 10, wherein when whether or not said newly received data is identical to any one of the newest M (M is an arbitrary setting value) data stored in a storage means and whether or not its transmission number is identical to any one of said newest M transmission numbers stored therein are firstly judged, and also only when it is not judged based on that judgment that said data of interest is said retransmission data, said retransmission data judgment or said data ommision judgment with respect to said newly received transmission number is carried out.

12. The method according to claim 10, wherein when said newly received transmission number is older than said newest transmission number stored in said storage means and also a difference therebetween is equal to or smaller than X, it is judged whether or not said transmission number identical to said transmission number of interest is stored in said storage means, and when said transmission number identical thereto is not stored in said storage means, it is judged that said newly received data is firstly transmitted and also it is said retransmission data which has been failed to be received, and in the case where that judgment has been carried out, both said data of interest and its transmission number are stored, and warning for said data reception is carried out, and also said transmission number of interest is not treated as said newest transmission number.

## Patentansprüche

1. Selektivfunkrufempfänger zur Verwendung in einem Selektivfunkrufsystem zum Hinzufügen einer Übertragungsnummer zu Übertragungsdaten jedes Selektivfunkrufempfängers zum Übertragen der Übertragungsdaten und Hinzufügen der gleichen Übertragungsnummer zu Übertragungsdaten zum Neuübertragen der Übertragungsdaten, wobei der Selektivfunkrufempfänger aufweist:
eine Erfassungseinrichtung zum Erfassen sowohl der Übertragungsdaten als auch ihrer Übertragungsnummer anhand eines empfangenen Signals,
eine Speichereinrichtung zum aufeinanderfolgenden Speichern der erfaßten Daten und ihrer Übertragungsnummern,
eine Neuübertragungsdaten-Beurteilungseinrichtung zum Urteilen, daß die neu empfangenen Daten Neuübertragungsdaten sind, wenn eine neu empfangene Übertragungsnummer älter als eine in der Speichereinrichtung gespeicherte neueste Übertragungsnummer ist und auch eine Differenz zwischen der neu empfangenen Übertragungsnummer und der neuesten Übertragungsnummer kleiner oder gleich X ist (X ist ein beliebiger Einstellwert),
eine Datenfortlassungs-Beurteilungseinrichtung zum Urteilen, daß eine Datenfortlassung in den Daten beim Empfang vorhanden ist, wenn eine neu empfangene Übertragungsnummer älter als die in der Speichereinrichtung gespeicherte neueste Übertragungsnummer ist und auch die Differenz zwischen der neu empfangenen Übertragungsnummer und der neuesten Übertragungsnummer größer als X ist, und
eine Steuereinrichtung zum Schreiben sowohl der neu empfangenen Daten als auch ihrer Übertragungsnummer in die Speichereinrichtung, wenn von der Neuübertragungsdaten-Beurteilungseinrichtung nicht geurteilt wurde, daß die neu empfangenen Daten die Neuübertragungsdaten sind, und auch zum Ausführen einer Warnung für den Datenempfang und zum Warnen vor der Datenfortlassung, wenn von der Datenfortlassungs-Beurteilungseinrichtung geurteilt wird, daß eine Datenfortlassung vorgenommen wurde.

2. Selektivfunkrufempfänger nach Anspruch 1, wobei die Neuübertragungsdaten-Beurteilungseinrichtung weiter eine Einrichtung zum Urteilen, daß die neu empfangenen Daten die Neuübertragungsdaten sind, wenn die neu empfangenen Daten mit einer der neuesten M (M ist ein beliebiger Einstellwert) in der Speichereinrichtung gespeicherten Dateneinheiten identisch sind und ihre Übertragungsnummer mit einer der darin gespeicherten neuesten M Übertragungsnummern identisch ist, aufweist.

3. Selektivfunkrufempfänger nach Anspruch 1, wobei die Datenfortlassungs-Beurteilungseinrichtung weiter eine Einrichtung zum Urteilen, daß eine Datenfortlassung in den Daten beim Empfang vorhanden ist, wenn die neu empfangene Übertragungsnummer eine Übertragungsnummer ist, die um größer oder gleich zwei neuer als die neueste in der Speichereinrichtung gespeicherte Übertragungsnummer ist, aufweist.

4. Selektivfunkrufempfänger nach Anspruch 2, wobei von der Neuübertragungsdaten-Beurteilungseinrichtung zuerst beurteilt wird, ob die neu empfangenen Daten mit einer der neuesten M (M ist ein beliebiger Einstellwert) in der Speichereinrichtung gespeicherten Dateneinheiten identisch sind und ob ihre Übertragungsnummer mit einer der darin gespeicherten neuesten M Übertragungsnummern identisch ist, und auf der Grundlage dieser Beurteilung die Beurteilung in bezug auf die empfangene Übertragungsnummer von der Neuübertragungsdaten-Beurteilungseinrichtung oder der Datenfortlassungs-Beurteilungseinrichtung ausgeführt wird.

5. Selektivfunkrufempfänger nach Anspruch 4, wobei die Neuübertragungsdaten-Beurteilungseinrichtung beurteilt, ob die Übertragungsnummer, die mit der interessierenden Übertragungsnummer identisch ist, in der Speichereinrichtung gespeichert ist, wenn die neu empfangene Übertragungsnummer älter als die neueste in der Speichereinrichtung gespeicherte Übertragungsnummer ist und auch eine Differenz dazwischen kleiner oder gleich X ist, und urteilt, daß die neu empfangenen Daten zuerst übertragen werden und sie auch die Neuübertragungsdaten sind, die nicht empfangen worden sind, wenn die damit identische Übertragungsnummer nicht in der Speichereinrichtung gespeichert ist, und in diesem Fall die Steuereinrichtung eine Einrichtung zum derartigen Steuern aufweist, daß sowohl die interessierenden Daten als auch ihre Übertragungsnummer in die Speichereinrichtung geschrieben werden und hinsichtlich des Datenempfangs gewarnt wird und die interessierende Übertragungsnummer nicht als die neueste Übertragungsnummer behandelt wird.

6. Selektivfunkrufempfänger zur Verwendung in einem Selektivfunkrufsystem zum Hinzufügen einer Übertragungsnummer zu Daten jedes Selektivfunkrufempfängers zum Übertragen der Übertragungsdaten und Hinzufügen der gleichen Übertragungsnummer zu Übertragungsdaten zum Neuübertragen der Übertragungsdaten, wobei der Selektivfunkrufempfänger aufweist:
eine Erfassungseinrichtung zum Erfassen sowohl der Daten als auch ihrer Übertragungsnummer auf der Grundlage des empfangenen Signals,
eine Speichereinrichtung zum aufeinanderfolgenden Speichern der empfangenen Daten und ihrer Übertragungsnummern,
eine Neuübertragungsdaten-Beurteilungseinrichtung zum Urteilen, daß die neu empfangenen Daten die Neuübertragungsdaten sind, wenn die neu empfangenen Daten mit einer der neuesten M (M ist ein beliebiger Einstellwert) in der Speichereinrichtung gespeicherten Daten identisch sind und auch ihre Übertragungsnummer mit einer der darin gespeicherten neuesten M Übertragungsnummern identisch ist oder wenn die neu empfangene Übertragungsnummer älter als die in der Speichereinrichtung gespeicherte neueste Übertragungsnummer ist und auch eine Differenz zwischen der neu empfangenen Übertragungsnummer und der neuesten Übertragungsnummer kleiner oder gleich X (X ist ein beliebiger Einstellwert) ist,
eine Datenfortlassungs-Beurteilungseinrichtung zum Urteilen, daß eine Datenfortlassung in den Daten beim Empfang vorhanden ist, wenn die neu empfangene Übertragungsnummer um zwei oder mehr neuer als die in der Speichereinrichtung gespeicherte neueste Übertragungsnummer ist oder wenn die neu empfangene Übertragungsnummer älter als die in der Speichereinrichtung gespeicherte neueste Übertragungsnummer ist und auch eine Differenz zwischen der neu empfangenen Übertragungsnummer und der neuesten Übertragungsnummer größer als X ist, und
eine Steuereinrichtung zum Schreiben sowohl der interessierenden Daten als auch ihrer Übertragungsnummer in die Speichereinrichtung, wenn von der Neuübertragungsdaten-Beurteilungseinrichtung nicht geurteilt wird, daß die neu empfangenen Daten die Neuübertragungsdaten sind, und auch zum Ausführen einer Warnung für den Datenempfang und zum Warnen vor der Datenfortlassung, wenn geurteilt wird, daß von der Datenfortlassungs-Beurteilungseinrichtung die Datenfortlassung vorgenommen wurde.

7. Selektivfunkrufempfänger nach Anspruch 6, wobei von der Neuübertragungsdaten-Beurteilungseinrichtung zuerst beurteilt wird, ob die neu empfangenen Daten mit einer der neuesten M (M ist ein beliebiger Einstellwert) in der Speichereinrichtung gespeicherten Dateneinheiten identisch sind und ob ihre Übertragungsnummer mit einer der darin gespeicherten neuesten M Übertragungsnummern identisch ist, und auch nur dann, wenn auf der Grundlage dieser Beurteilung nicht geurteilt wird, daß die interessierenden Daten die Neuübertragungsdaten sind, von der Neuübertragungsdaten-Beurteilungseinrichtung oder der Datenfortlassungs-Beurteilungseinrichtung eine Beurteilung in bezug auf die neu empfangene Übertragungsnummer ausgeführt wird.

8. Selektivfunkrufempfänger nach Anspruch 6, wobei die Neuübertragungsdaten-Beurteilungseinrichtung beurteilt, ob die mit der interessierenden Übertragungsnummer identische Übertragungsnummer in der Speichereinrichtung gespeichert ist, wenn die neu empfangene Übertragungsnummer älter als die neueste in der Speichereinrichtung gespeicherte Übertragungsnummer ist und auch eine Differenz dazwischen kleiner oder gleich X ist, und urteilt, daß die neu empfangenen Daten zuerst übertragen werden und sie auch die Neuübertragungsdaten sind, die nicht empfangen worden sind, wenn die damit identische Übertragungsnummer nicht in der Speichereinrichtung gespeichert ist, und in diesem Fall die Steuereinrichtung eine Einrichtung zum derartigen Steuern aufweist, daß sowohl die interessierenden Daten als auch ihre Übertragungsnummer in die Speichereinrichtung geschrieben werden und hinsichtlich des Datenempfangs gewarnt wird und die interessierende Übertragungsnummer nicht als die neueste Übertragungsnummer behandelt wird.

9. Selektivfunkrufempfänger zur Verwendung in einem Selektivfunkrufsystem zum Hinzufügen einer Übertragungsnummer zu Daten jedes Selektivfunkrufempfängers zum Übertragen der Übertragungsdaten und Hinzufügen der gleichen Übertragungsnummer zu Übertragungsdaten zum Übertragen der Übertragungsdaten, wobei der Selektivfunkrufempfänger aufweist:
eine Antenne zum Empfangen eines empfangenen Signals,
eine Erfassungseinrichtung zum Demodulieren des empfangenen Signals und zum Erfassen sowohl der Daten als auch ihrer Übertragungsnummer anhand des empfangenen Signals,
eine Speichereinrichtung zum aufeinanderfolgenden Speichern der empfangenen Daten und ihrer Übertragungsnummern,
eine Anzeigeeinrichtung zum Anzeigen sowohl der empfangenen Daten als auch ihrer Übertragungsnummern,
eine Warneinrichtung zum Warnen,
eine erste Beurteilungseinrichtung zum Vergleichen einer neu empfangenen Dateneinheit und ihrer Übertragungsnummer mit den neuesten M (M ist ein beliebiger Einstellwert) Daten und ihren Übertragungsnummern, die in der Speichereinrichtung gespeichert sind, und zum Ausgeben eines ersten Beurteilungssignals, wenn die neu empfangenen Daten mit einer der neuesten M Dateneinheiten identisch sind und auch ihre Übertragungsnummer mit einer der Übertragungsnummern der neuesten M Daten identisch ist,
eine zweite Beurteilungseinrichtung zum Vergleichen, wenn das erste Beurteilungssignal von der ersten Beurteilungseinrichtung nicht ausgegeben wird, der neu empfangenen Übertragungsnummer mit der neuesten Übertragungsnummer und zum Ausgeben eines zweiten Beurteilungssignals, wenn die neu empfangene Übertragungsnummer größer ist als die in der Speichereinrichtung gespeicherte neueste Übertragungsnummer und auch die neu empfangene Übertragungsnummer mit der neuesten Übertragungsnummer kontinuierlich ist, und zum Ausgeben eines dritten Beurteilungssignals, wenn die neu empfangene Übertragungsnummer um größer oder gleich zwei neuer ist als die in der Speichereinrichtung gespeicherte neueste Übertragungsnummer, und zum Ausgeben eines vierten Beurteilungssignals, wenn die neu empfangene Übertragungsnummer kleiner ist als die in der Speichereinrichtung gespeicherte neueste Übertragungsnummer,
eine dritte Beurteilungseinrichtung zum Berechnen, wenn das vierte Beurteilungssignal empfangen wird, einer Differenz zwischen der neu empfangenen Übertragungsnummer und der neuesten Übertragungsnummer und zum Ausgeben eines fünften Beurteilungssignals, wenn die Differenz größer oder gleich X ist (X ist ein beliebiger Einstellwert), und zum Ausgeben eines sechsten Beurteilungssignals, wenn die Differenz kleiner oder gleich X ist,
eine Steuereinrichtung zum derartigen Steuern, daß die Warnung durch die Warneinrichtung nicht ausgeführt wird, wenn das erste Beurteilungssignal empfangen wird, und wenn das zweite Beurteilungssignal empfangen wird, sowohl die neu empfangenen Daten als auch ihre Übertragungsnummer in der Speichereinrichtung gespeichert werden, die Warnung zum Mitteilen des Datenempfangs von der Warneinrichtung ausgeführt wird und auch sowohl die Daten als auch ihre Übertragungsnummer auf der Anzeigeeinrichtung angezeigt werden, und wenn das dritte Beurteilungssignal empfangen wird, sowohl die neu empfangenen Daten als auch ihre Übertragungsnummer in der Speichereinrichtung gespeichert werden, die Warnung zum Mitteilen des Datenempfangs von der Warneinrichtung ausgeführt wird und auch sowohl die Daten als auch ihre Übertragungsnummer auf der Anzeigeeinrichtung angezeigt werden und anschließend durch die Warneinrichtung mitgeteilt wird, daß eine Datenfortlassung aufgetreten ist, und die fortgelassene Übertragungsnummer auf der Anzeigeeinrichtung angezeigt wird, und wenn das fünfte Beurteilungssignal empfangen wird, sowohl die neu empfangenen Daten als auch ihre Übertragungsnummer in der Speichereinrichtung gespeichert werden, die Warnung zum Mitteilen des Datenempfangs von der Warneinrichtung ausgeführt wird und sowohl die Daten als auch ihre Übertragungsnummer auf der Anzeigeeinrichtung angezeigt werden und anschließend durch die Warneinrichtung mitgeteilt wird, daß eine Datenfortlassung aufgetreten ist, und die fortgelassene Übertragungsnummer auf der Anzeigeeinrichtung angezeigt wird, und wenn das sechste Beurteilungssignal empfangen wird, die neu empfangenen Daten und ihre Übertragungsnummer mit allen Daten bzw. ihren in der Speichereinrichtung gespeicherten Übertragungsnummern verglichen werden und dann, wenn die neu empfangenen Daten mit irgendwelchen der Daten identisch sind und auch ihre Übertragungsnummer mit irgendeiner ihrer Übertragungsnummern identisch ist, die Warnung zum Mitteilen des Datenempfangs nicht ausgeführt wird, während, wenn die neu empfangenen Daten nicht mit irgendwelchen der Daten identisch sind und auch ihre Übertragungsnummer nicht mit irgendeiner ihrer Übertragungsnummern identisch ist, sowohl die neu empfangenen Daten als auch ihre Übertragungsnummer in der Speichereinrichtung gespeichert werden, die Warnung zum Mitteilen des Datenempfangs von der Warneinrichtung ausgeführt wird, sowohl die Daten als auch ihre Übertragungsnummer auf der Anzeigeeinrichtung angezeigt werden und auch die Übertragungsnummer der neu empfangenen Daten nicht als die neueste Übertragungsnummer behandelt wird.

10. Verfahren zum Steuern der Neuübertragung von Daten zur Verwendung in einem Selektivfunkrufsystem zum Hinzufügen einer Übertragungsnummer zu Übertragungsdaten jedes Selektivfunkrufempfängers zum Übertragen der Übertragungsdaten und Hinzufügen der gleichen Übertragungsnummer zu Neuübertragungsdaten zum Neuübertragen der Neuübertragungsdaten, wobei das Verfahren die folgenden Schritte aufweist:
Erfassen sowohl der Daten als auch ihrer Übertragungsnummer anhand des empfangenen Signals,
aufeinanderfolgendes Speichern der empfangenen Daten und ihrer Übertragungsnummern darin,
Urteilen, wenn die neu empfangenen Daten mit irgendwelchen der neuesten M (M ist ein beliebiger Einstellwert) Daten identisch sind, welche zuvor gespeichert worden sind, und auch ihre Übertragungsnummer mit irgendeiner der so gespeicherten neuesten M Übertragungsnummern identisch ist, und wenn die neu empfangene Übertragungsnummer älter als die neueste Übertragungsnummer ist, die gespeichert ist, und auch eine Differenz zwischen der neu empfangenen Übertragungsnummer und der neuesten Übertragungsnummer kleiner oder gleich X ist (X ist ein beliebiger Einstellwert), daß die neu empfangenen Daten die Neuübertragungsdaten sind,
Urteilen, wenn die neu empfangene Übertragungsnummer um größer oder gleich zwei neuer als die neueste Übertragungsnummer ist, die zuvor gespeichert wurde, und wenn die neu empfangene Übertragungsnummer älter als die neueste so gespeicherte Übertragungsnummer ist und auch eine Differenz zwischen der neu empfangenen Übertragungsnummer und der neuesten Übertragungsnummer größer als X ist, daß eine Datenfortlassung in den Daten beim Empfang vorhanden ist, und
Speichern, wenn die Beurteilung, daß die neu empfangenen Daten die Neuübertragungsdaten sind, von der Neuübertragungsdaten-Beurteilungseinrichtung ausgeführt wurde, sowohl der neu empfangenen Daten als auch ihrer Übertragungsnummer, und auch Ausführen einer Warnung für den Datenempfang und Ausführen einer Warnung für die Datenfortlassung, wenn geurteilt wird, daß eine Datenfortlassung aufgetreten ist.

11. Verfahren nach Anspruch 10, wobei von der Neuübertragungsdaten-Beurteilungseinrichtung zuerst beurteilt wird, ob die neu empfangenen Daten mit einer der neuesten M (M ist ein beliebiger Einstellwert) in der Speichereinrichtung gespeicherten Daten identisch sind und ob ihre Übertragungsnummer mit einer der darin gespeicherten neuesten M Übertragungsnummern identisch ist, und auch nur dann, wenn auf der Grundlage dieser Beurteilung nicht geurteilt wird, daß die interessierenden Daten die Neuübertragungsdaten sind, von der Neuübertragungsdaten-Beurteilungseinrichtung oder der Datenfortlassungs-Beurteilungseinrichtung eine Beurteilung in bezug auf die neu empfangene Übertragungsnummer ausgeführt wird.

12. Verfahren nach Anspruch 10, wobei, wenn die neu empfangene Übertragungsnummer älter ist als die in der Speichereinrichtung gespeicherte neueste Übertragungsnummer und auch eine Differenz dazwischen kleiner oder gleich X ist, beurteilt wird, ob die mit der interessierenden Übertragungsnummer identische Übertragungsnummer in der Speichereinrichtung gespeichert ist, und wenn die damit identische Übertragungsnummer nicht in der Speichereinrichtung gespeichert ist, geurteilt wird, daß die neu empfangenen Daten zuerst übertragen wurden und auch die Neuübertragungsdaten nicht empfangen wurden, und in dem Fall, in dem diese Beurteilung ausgeführt wurde, sowohl die interessierenden Daten als auch ihre Übertragungsnummer gespeichert werden und eine Warnung für den Datenempfang ausgeführt wird und auch die interessierende Übertragungsnummer nicht als die neueste Übertragungsnummer behandelt wird.

## Revendications

1. Récepteur radio d'appel sélectif à utiliser dans un système radio d'appel sélectif pour ajouter un numéro de transmission à des données de transmission de chaque récepteur radio d'appel sélectif pour transmettre lesdites données de transmission et ajouter le même numéro de transmission à des données de transmission afin de retransmettre lesdites données de transmission, ledit récepteur radio d'appel sélectif comportant :
des moyens de détection pour détecter à la fois des données de transmission et leur numéro de transmission à partir d'un signal reçu,
des moyens de mémorisation pour mémoriser successivement dans ceux-ci lesdites données détectées et leurs numéros de transmission,
des moyens de détermination de données de retransmission pour déterminer, lorsqu'un numéro de transmission récemment reçu est plus ancien qu'un numéro de transmission le plus récent mémorisé dans lesdits moyens de mémorisation et également lorsqu'une différence entre ledit numéro de transmission récemment reçu et ledit numéro de transmission le plus récent est égale ou inférieure à X (X est une valeur fixée de manière arbitraire), que lesdites données récemment reçues sont des données de retransmission,
des moyens de détermination d'omission de données pour déterminer, lorsqu'un numéro de transmission récemment reçu est plus ancien que le numéro de transmission le plus récent mémorisé dans les moyens de mémorisation et également lorsque la différence entre ledit numéro de transmission récemment reçu et ledit numéro de transmission le plus récent est supérieure à ladite valeur X, qu'une omission de données est présente dans lesdites données en réception, et
des moyens de commande pour écrire, lorsqu'il n'a pas été déterminé par lesdits moyens de détermination de données de retransmission que lesdites données récemment reçues sont lesdites données de retransmission, à la fois lesdites données récemment reçues et leur numéro de transmission dans lesdits moyens de mémorisation et également pour déclencher une alarme pour ladite réception de données, et une alarme pour ladite omission de données, lorsqu'il a été déterminé par lesdits moyens de détermination d'omission de données qu'il existe une omission de données.

2. Récepteur radio d'appel sélectif selon la revendication 1, dans lequel lesdits moyens de détermination de données de retransmission comportent en outre des moyens pour déterminer, lorsque lesdites données récemment reçues sont identiques à l'une des M (M est une valeur fixée de manière arbitraire)données les plus récentes mémorisées dans lesdits moyens de mémorisation, et lorsque leur numéro de transmission est identique à l'un desdits M numéros de transmission les plus récents mémorisés dans ceux-ci, que lesdites données récemment reçues sont lesdites données de retransmission.

3. Récepteur radio d'appel sélectif selon la revendication 1, dans lequel lesdits moyens de détermination d'omission de données comportent en outre des moyens pour déterminer, lorsque ledit numéro de transmission récemment reçu est un numéro de transmission qui est plus récent que le numéro de transmission le plus récent mémorisé dans lesdits moyens de mémorisation d'une valeur égale ou supérieure à deux, qu'une omission de données est présente dans lesdites données en réception.

4. Récepteur radio d'appel sélectif selon la revendication 2, dans lequel ce n'est que lorsque l'on a déterminé tout d'abord par lesdits moyens de détermination de données de retransmission si oui ou non les données récemment reçues sont identiques à l'une des M (M est une valeur fixée de manière arbitraire) données les plus récentes mémorisées dans lesdits moyens de mémorisation et si oui ou non leur numéro de transmission est identique à l'un des M numéros de transmission les plus récents mémorisés dans ceux-ci, et, sur la base de ladite détermination, que ladite détermination concernant le numéro de transmission reçu est effectuée par lesdits moyens de détermination de données de retransmission ou lesdits moyens de détermination d'omission de données.

5. Récepteur radio d'appel sélectif selon la revendication 4, dans lequel lesdits moyens de détermination de données de retransmission comportent des moyens pour déterminer si oui ou non le numéro de transmission identique audit numéro de transmission d'intérêt est mémorisé dans lesdits moyens de mémorisation lorsque ledit numéro de transmission récemment reçu est plus ancien que ledit numéro de transmission le plus récent mémorisé dans lesdits moyens de mémorisation et également si oui ou non une différence entre eux est égale ou inférieure à X, et pour déterminer que lesdites données récemment reçues sont tout d'abord transmises et également que ce sont lesdites données de retransmission dont la réception a échoué lorsque ledit numéro de transmission identique à celui-ci n'est pas mémorisé dans lesdits moyens de mémorisation,
et, dans ce cas, lesdits moyens de commande comportent des moyens pour commander de cette manière qu'à la fois lesdites données d'intérêt et leur numéro de transmission soient écrits dans lesdits moyens de mémorisation, et une alarme pour ladite réception de données, et ledit numéro de transmission d'intérêt n'est pas traité en tant que ledit numéro de transmission le plus récent.

6. Récepteur radio d'appel sélectif à utiliser dans un système radio d'appel sélectif pour ajouter un numéro de transmission à des données de chaque récepteur radio d'appel sélectif pour transmettre lesdites données de transmission et ajouter le même numéro de transmission à des données de transmission afin de retransmettre lesdites données de transmission, ledit récepteur radio d'appel sélectif comportant :
des moyens de détection pour détecter à la fois lesdites donnés et leur numéro de transmission sur la base dudit signal reçu,
des moyens de mémorisation pour mémoriser successivement dans ceux-ci lesdites données reçues et leurs numéros de transmission,
des moyens de détermination de données de retransmission pour déterminer, lorsque lesdites données récemment reçues sont identiques à l'une des M (M est une valeur fixée de manière arbitraire) données les plus récentes mémorisées dans lesdits moyens de mémorisation et également lorsque leur numéro de transmission est identique à l'un desdits M numéros de transmission les plus récents mémorisés dans ceux-ci, ou lorsque ledit numéro de transmission récemment reçu est plus ancien que ledit numéro de transmission le plus récent mémorisé dans lesdits moyens de mémorisation et également lorsqu'une différence entre ledit numéro de transmission récemment reçu et ledit numéro de transmission le plus récent est égale ou inférieure à X (X est une valeur fixée de manière arbitraire), que lesdites données récemment reçues sont lesdites données de retransmission,
des moyens de détermination d'omission de données pour déterminer, lorsque ledit numéro de transmission récemment reçu est plus récent que ledit numéro de transmission le plus récent mémorisé dans lesdits moyens de mémorisation d'une valeur égale à deux ou supérieure, ou lorsque ledit numéro de transmission récemment reçu est plus ancien que ledit numéro de transmission le plus récent mémorisé dans les moyens de mémorisation et également lorsqu'une différence entre ledit numéro de transmission récemment reçu et ledit numéro de transmission le plus récent est supérieure à ladite valeur X, qu'une omission de données est présente dans lesdites données en réception, et
des moyens de commande pour écrire, lorsqu'il n'a pas été déterminé par lesdits moyens de détermination de données de retransmission, que lesdites données récemment reçues sont lesdites données de retransmission, à la fois lesdites données d'intérêt et leur numéro de transmission dans lesdits moyens de mémorisation et également pour déclencher une alarme pour ladite réception de données, et une alarme pour ladite omission de données, lorsqu'il a été déterminé par lesdits moyens de détermination d'omission de données que ladite omission de données existe.

7. Récepteur radio d'appel sélectif selon la revendication 6, dans lequel ce n'est que lorsque l'on a déterminé tout d'abord par lesdits moyens de détermination de données de retransmission si oui ou non lesdites données récemment reçues sont identiques à l'une des M (M est une valeur fixée de manière arbitraire) données les plus récentes mémorisées dans lesdits moyens de mémorisation et si oui ou non leur numéro de transmission est identique à l'un desdits M numéros de transmission les plus récents mémorisés dans ceux-ci, et également que lorsque l'on n'a pas déterminé sur la base de cette détermination que lesdites données d'intérêt sont lesdites données de retransmission, qu'une détermination concernant ledit numéro de transmission récemment reçu est effectuée par lesdits moyens de détermination de données de retransmission ou lesdits moyens de détermination d'omission de données.

8. Récepteur radio d'appel sélectif selon la revendication 6, dans lequel lesdits moyens de détermination de données de retransmission comportent des moyens pour déterminer, lorsque ledit numéro de transmission récemment reçu est plus ancien que ledit numéro de transmission le plus récent mémorisé dans lesdits moyens de mémorisation et également lorsqu'une différence entre eux est égale ou inférieure à X, si oui ou non ledit numéro de transmission identique audit numéro de transmission d'intérêt est mémorisé dans lesdits moyens de mémorisation et, pour déterminer, lorsque ledit numéro de transmission identique à celui-ci n'est pas mémorisé dans lesdits moyens de mémorisation, que lesdites données récemment reçues sont tout d'abord transmises et également que ce sont lesdites données de retransmission dont la réception a échoué et, dans ce cas, lesdits moyens de commande comportent des moyens pour commander de cette manière qu'à la fois lesdites données d'intérêt et leur numéro de transmission soient écrits dans lesdits moyens de mémorisation, et déclenchent une alarme pour ladite réception de données, et ledit numéro de transmission d'intérêt n'est pas traité en tant que ledit numéro de transmission le plus récent.

9. Récepteur radio d'appel sélectif à utiliser dans un système radio d'appel sélectif pour ajouter un numéro de transmission à des données de chaque récepteur radio d'appel sélectif pour transmettre lesdites données de transmission et ajouter le même numéro de transmission à des données de transmission afin de transmettre lesdites données de transmission, ledit récepteur radio d'appel sélectif comportant :
une antenne pour recevoir un signal reçu,
des moyens de détection pour démoduler ledit signal reçu et détecter à la fois des données et leur numéro de transmission à partir dudit signal reçu,
des moyens de mémorisation pour mémoriser successivement dans ceux-ci à la fois lesdites données reçues et leurs numéros de transmission,
des moyens d'affichage pour afficher sur ceux-ci à la fois lesdites données reçues et leurs numéros de transmission,
des moyens d'alarme pour avertir,
des premiers moyens de détermination pour comparer des données récemment reçues et leur numéro de transmission aux M (M est une valeur fixée de manière arbitraire) données les plus récentes et à leurs numéros de transmission mémorisés dans lesdits moyens de mémorisation, et délivrer en sortie un premier signal de détermination lorsque lesdites données récemment reçues sont identiques à l'une quelconque desdites M données les plus récentes et lorsque également leur numéro de transmission est égal à l'un quelconque desdits numéros de transmission desdites M données les plus récentes,
des deuxièmes moyens de détermination pour comparer, lorsque ledit premier signal de détermination n'est pas délivré en sortie par lesdits premiers moyens de détermination, ledit numéro de transmission récemment reçu au numéro de transmission le plus récent, et délivrer en sortie un deuxième signal de détermination lorsque ledit numéro de transmission récemment reçu est supérieur audit numéro de transmission le plus récent mémorisé dans les moyens de mémorisation et également lorsque ledit numéro de transmission récemment reçu suit ledit numéro de transmission le plus récent, et délivrer en sortie un troisième signal de détermination lorsque ledit numéro de transmission récemment reçu est plus récent que ledit numéro de transmission le plus récent mémorisé dans lesdits moyens de mémorisation d'une valeur égale ou supérieure à deux, et délivrer en sortie un quatrième signal de détermination lorsque ledit numéro de transmission récemment reçu est inférieur audit numéro de transmission le plus récent mémorisé dans lesdits moyens de mémorisation,
des troisièmes moyens de détermination pour calculer, à la réception dudit quatrième signal de détermination, une différence entre ledit numéro de transmission récemment reçu et ledit numéro de transmission le plus récent, et délivrer en sortie un cinquième signal de détermination lorsque ladite différence est égale ou supérieure à X (X est une valeur fixée de manière arbitraire), et délivrer en sortie un sixième signal de détermination lorsque ladite différence est égale ou inférieure à la ladite valeur X ;
des moyens de commande pour commander de cette manière, à la réception dudit premier signal de détermination, que ladite alarme ne soit pas déclenchée par lesdits moyens d'alarme et, à la réception dudit deuxième signal de détermination, qu'à la fois lesdites données récemment reçues et leur numéro de transmission soient mémorisés dans lesdits moyens de mémorisation, que ladite alarme destinée à avertir de ladite réception de données soit déclenchée par lesdits moyens d'alarme, et également qu'à la fois lesdites données et leur numéro de transmission soient affichés sur lesdits moyens d'affichage et, à la réception dudit troisième signal de détermination, qu'à la fois lesdites données récemment reçues et leur numéro de transmission soient mémorisés dans lesdits moyens de mémorisation, que ladite alarme pour avertir de ladite réception de données soit déclenchée par lesdits moyens d'alarme et également qu'à la fois lesdites données et leur numéro de transmission soient affichés sur lesdits moyens d'affichage et, ensuite, qu'il soit signalé par lesdits moyens d'alarme qu'une omission de données s'est produite, et que ledit numéro de transmission omis soit affiché sur lesdits moyens d'affichage et, à la réception dudit cinquième signal de détermination, qu'à la fois lesdites données récemment reçues et leur numéro de transmission soient mémorisés dans lesdits moyens de mémorisation, que ladite alarme destinée à avertir de ladite réception de données soit déclenchée par lesdits moyens d'alarme, et qu'à la fois lesdites données et leur numéro de transmission soient affichés sur lesdits moyens d'affichage et, ensuite, qu'il soit signalé par lesdits moyens d'alarme qu'une omission de données s'est produite, et que ledit numéro de transmission omis soit affiché sur lesdits moyens d'affichage et, à la réception dudit sixième signal de détermination, que lesdites données récemment reçues et leurs numéros de transmission soient comparés à toutes lesdites données et à leurs numéros de transmission mémorisés dans lesdits moyens de mémorisation, respectivement, et ensuite lorsque lesdites donnés récemment reçues sont identiques à l'une quelconque parmi toutes lesdites données et également que leur numéro de transmission est identique à l'un quelconque parmi les numéros de transmission de toutes lesdites données, que ladite alarme destinée à avertir de ladite réception de données ne soit pas déclenchée, alors que lorsque lesdites données récemment reçues ne sont pas identiques à l'une quelconque parmi toutes lesdites données et également que leur numéro de transmission n'est pas identique à l'un quelconque parmi les numéros de transmission de toutes les données, qu'à la fois lesdites données récemment reçues et leur numéro de transmission soient mémorisés dans lesdits moyens de mémorisation, que ladite alarme destinée à avertir de ladite réception de données soit déclenchée par lesdits moyens d'alarme, qu'à la fois lesdites données et leur numéro de transmission soient affichés sur lesdits moyens d'affichage, et également que ledit numéro de transmission desdites données récemment reçues ne soit pas du tout traité en tant que numéro de transmission le plus récent.

10. Procédé pour commander des données de retransmission à utiliser dans un système radio d'appel sélectif pour ajouter un numéro de transmission à des données de transmission de chaque récepteur radio d'appel sélectif pour transmettre lesdites données de transmission et ajouter le même numéro de transmission à des données de retransmission afin de retransmettre lesdites données de retransmission, ledit procédé comportant les étapes consistant à :
détecter à la fois lesdites données et leur numéro de transmission sur la base dudit signal reçu,
mémoriser successivement lesdites données reçues et leurs numéros de transmission dans des moyens de mémorisation,
déterminer, lorsque lesdites données récemment reçues sont identiques à l'une quelconque des M (M est une valeur fixée de manière arbitraire) données les plus récentes qui sont précédemment mémorisées et également lorsque leur numéro de transmission est identique à l'un quelconque desdits M numéros de transmission les plus récents ainsi mémorisés, et lorsque ledit numéro de transmission récemment reçu est plus ancien que ledit numéro de transmission le plus récent qui est mémorisé et également lorsqu'une différence entre ledit numéro de transmission récemment reçu et ledit numéro de transmission le plus récent est égale ou inférieure à X (X est une valeur fixée de manière arbitraire), que lesdites données récemment reçues sont lesdites données de retransmission,
déterminer, lorsque ledit numéro de transmission récemment reçu est plus récent que ledit numéro de transmission le plus récent qui est précédemment mémorisé d'une valeur égale ou supérieure à deux, et lorsque ledit numéro de transmission récemment reçu est plus ancien que ledit numéro de transmission le plus récent ainsi mémorisé et également lorsqu'une différence entre ledit numéro de transmission récemment reçu et ledit numéro de transmission le plus récent est supérieure à ladite valeur X, qu'une omission de données est présente dans lesdites données en réception, et
mémoriser, lorsqu'il a été déterminé par lesdits moyens de détermination de données de retransmission que lesdites données récemment reçues sont lesdites données de retransmission, à la fois lesdites données récemment reçues et leur numéro de transmission et déclencher également une alarme pour ladite réception de données, et déclencher, lorsqu'il est déterminé que ladite omission de données existe, une alarme pour ladite omission de données.

11. Procédé selon la revendication 10, dans lequel ce n'est que lorsque l'on a déterminé tout d'abord si oui ou non lesdites données récemment reçues sont identiques à l'une quelconque des M (M est une valeur fixée de manière arbitraire) données les plus récentes mémorisées dans des moyens de mémorisation et si oui ou on leur numéro de transmission est identique à l'un quelconque desdits M numéros de transmission les plus récents mémorisés dans ceux-ci, et également que lorsque l'on n'a pas déterminé sur la base de cette détermination que lesdites données d'intérêt sont lesdites données de retransmission, que ladite détermination de données de retransmission ou ladite détermination d'omission de données concernant ledit numéro de transmission récemment reçu est effectuée.

12. Procédé selon la revendication 10, dans lequel lorsque ledit numéro de transmission récemment reçu est plus ancien que le numéro de transmission le plus récent mémorisé dans lesdits moyens de mémorisation et également lorsqu'une différence entre eux est égale ou inférieure à X, il est déterminé si oui ou non ledit numéro de transmission identique audit numéro de transmission d'intérêt est mémorisé dans lesdits moyens de mémorisation, et lorsque ledit numéro de transmission identique à celui-ci n'est pas mémorisé dans lesdits moyens de mémorisation, il est déterminé que lesdites données récemment reçues sont tout d'abord transmises et également que ce sont lesdites données de retransmission dont la réception a échoué et, dans le cas où cette détermination a été effectuée, qu'à la fois lesdites données d'intérêt et leur numéro de transmission sont mémorisés, et qu'une alarme pour ladite réception de données est déclenchée, et également que ledit numéro de transmission d'intérêt n'est pas traité en tant que ledit numéro de transmission le plus récent.
